# EUROPEAN PATENT APPLICATION

(11) **EP 4 230 384 A1**
(43) Date of publication of application: **23.08.2023**
(21) Application number: 23157026.8
(22) Date of filing: 16.02.2023
(51) Int. Cl.: B29C 64/112, B29C 64/393, B33Y 30/00, B33Y 40/00, B41J 2/165

(54) **THREE-DIMENSIONAL FABRICATING APPARATUS, THREE-DIMENSIONAL FABRICATING METHOD, AND THREE-DIMENSIONAL FABRICATING SYSTEM**

(30) Priority: 22.02.2022 JP 2022025875; 14.11.2022 JP 2022182070
(71) Applicant: Ricoh Company, Ltd., Tokyo 143-8555 (JP)
(72) Inventor: ITO, Yoichi, Tokyo, 143-8555 (JP); ARAO, Tsuyoshi, Tokyo, 143-8555 (JP); AKIEDA, Tomomi, Tokyo, 143-8555 (JP); MATSUMURA, Takashi, Tokyo, 143-8555 (JP)
(74) Representative: SSM Sandmair

(57) **Abstract**

A three-dimensional fabricating apparatus (100) includes a discharge head (10), a detector (7, 12), a non-contact cleaner (50), and a controller (500). The discharge head (10) discharges droplets to fabricate a three-dimensional object. The detector (7, 12) detects a state of the discharge head. The non-contact cleaner (50) cleans the discharge head in a non-contact manner. The controller (500) controls an operation of the three-dimensional fabricating apparatus according to the state of the discharge head detected by the detector after the non-contact cleaner cleans the discharge head.

## Description

### BACKGROUND

### Technical Field

Embodiments of the present disclosure relate to a three-dimensional fabricating apparatus, a three-dimensional fabricating method, and a three-dimensional fabricating system.

### Related Art

Conventionally, there have been known three-dimensional fabricating apparatuses that form a three-dimensional object. Furthermore, there is disclosed, as a technique for cleaning a three-dimensional fabricating apparatus, a technique for observing the state of a nozzle face and maintaining the nozzle face based on the observation result (see Japanese Unexamined Patent Application Publication No. 2021-160338, for example).

However, the technique of Japanese Unexamined Patent Application Publication No. 2021-160338 has room for improvement in terms of performing highly reliable cleaning while suppressing damage to the nozzle face.

### SUMMARY

An object of the present disclosure is to provide a three-dimensional fabricating apparatus that is capable of executing highly reliable cleaning while suppressing damage to a discharge head.

In order to solve the above problem, according to an aspect of the present disclosure, a three-dimensional fabricating apparatus includes a discharge head, a detector, a non-contact cleaner, and a controller. The discharge head discharges droplets to fabricate a three-dimensional object. The detector detects a state of the discharge head. The non-contact cleaner cleans the discharge head in a non-contact manner. The controller controls an operation of the three-dimensional fabricating apparatus according to the state of the discharge head detected by the detector after the non-contact cleaner cleans the discharge head.

According to another aspect of the present disclosure, a three-dimensional fabricating method for fabricating a three-dimensional object includes discharging, cleaning, detecting, and controlling. The discharging discharge droplets from a discharge head. The cleaning cleans the discharge head in a non-contact manner. The detecting detects a state of the discharge head. The controlling controls an operation of a three-dimensional fabricating apparatus to fabricate the three-dimensional object, according to the state of the discharge head after cleaning the discharge head in the non-contact manner.

According to still another aspect of the present disclosure, a three-dimensional fabricating system includes the three-dimensional fabricating apparatus according to any one of claims 1 to 9 and a fabrication-data generation apparatus to generate fabrication data of a three-dimensional object. The fabrication-data generation apparatus provides the fabrication data to the three-dimensional fabricating apparatus, and the three-dimensional fabricating apparatus fabricates the three-dimensional object according to the fabrication data.

According to an aspect of the present disclosure, there is provided a three-dimensional fabricating apparatus that is capable of executing highly reliable cleaning while preventing damage to a discharge head.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a plan view of a three-dimensional fabricating apparatus according to a first embodiment;
FIG. 2 is a partial cross-sectional view of the three-dimensional fabricating apparatus according to the first embodiment;
FIG. 3 is a plan view of a carriage on which a discharge head is mounted and a non-contact cleaner;
FIG. 4 is a side view of the carriage on which the discharge head is mounted and the non-contact cleaner;
FIG. 5 is a bottom view of a discharge head having a nozzle face on which a plurality of nozzles N is formed;
FIG. 6 is a side view of the cleaner that executes non-contact cleaning on the nozzle face of the discharge head;
FIG. 7 is a side view of the cleaner that performs non-contact cleaning on the nozzle face of the discharge head;
FIG. 8 is a side view of a gap between the nozzle face of the discharge head and a wiper;
FIG. 9 is a block diagram illustrating a hardware configuration of the three-dimensional fabricating apparatus according to the first embodiment;
FIG. 10 is a functional block diagram of the three-dimensional fabricating apparatus according to the first embodiment;
FIG. 11 is a flowchart of a procedure of a cleaning process executed in the three-dimensional fabricating apparatus;
FIG. 12 is a flowchart of a procedure of a non-contact cleaning operation;
FIG. 13 is a flowchart of a procedure of a discharge detecting operation;
FIG. 14 is a flowchart illustrating a procedure of a contact cleaning operation;
FIG. 15 is a side view of a cleaner of the three-dimensional fabricating apparatus according to a second embodiment, and is a diagram illustrating a non-contact cleaner that executes non-contact cleaning on a nozzle face of a discharge head; and
FIG. 16 is a side view of the cleaner of the three-dimensional fabricating apparatus according to the second embodiment, and is a diagram illustrating the non-contact cleaner that executes non-contact cleaning on the nozzle face of the discharge head.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Hereinafter, a three-dimensional fabricating apparatus according to each embodiment will be described with reference to the accompanying drawings. In the present specification and the drawings, substantially identical components are denoted by identical reference numerals, and redundant description thereof may be omitted.

### First Embodiment

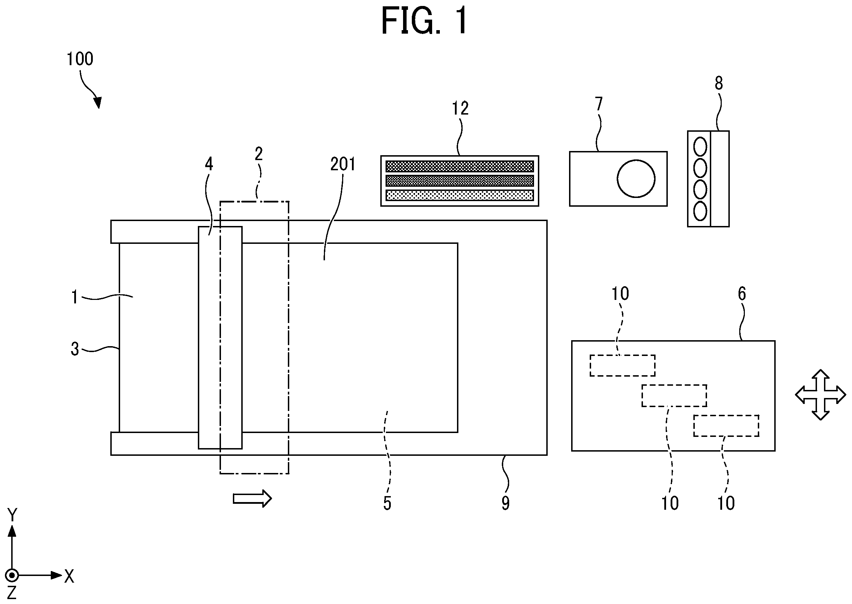

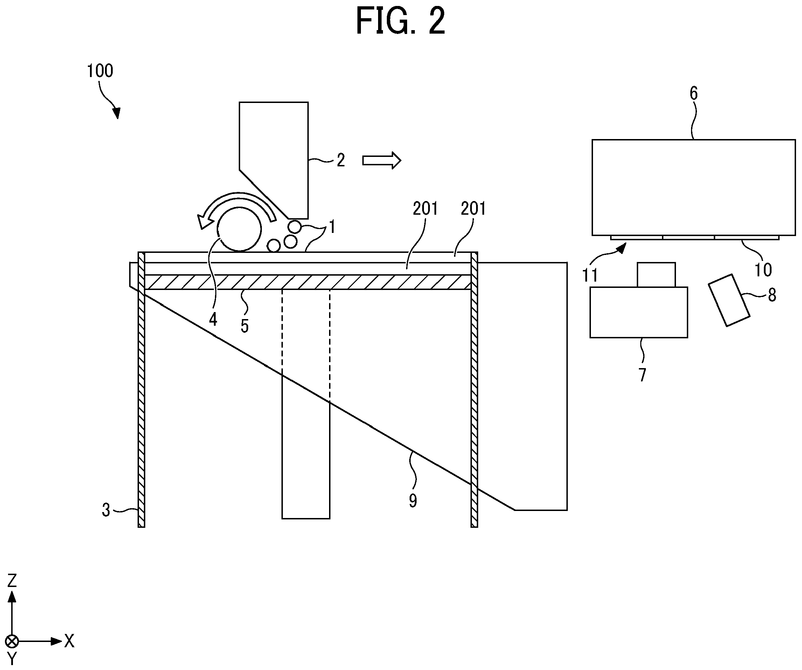

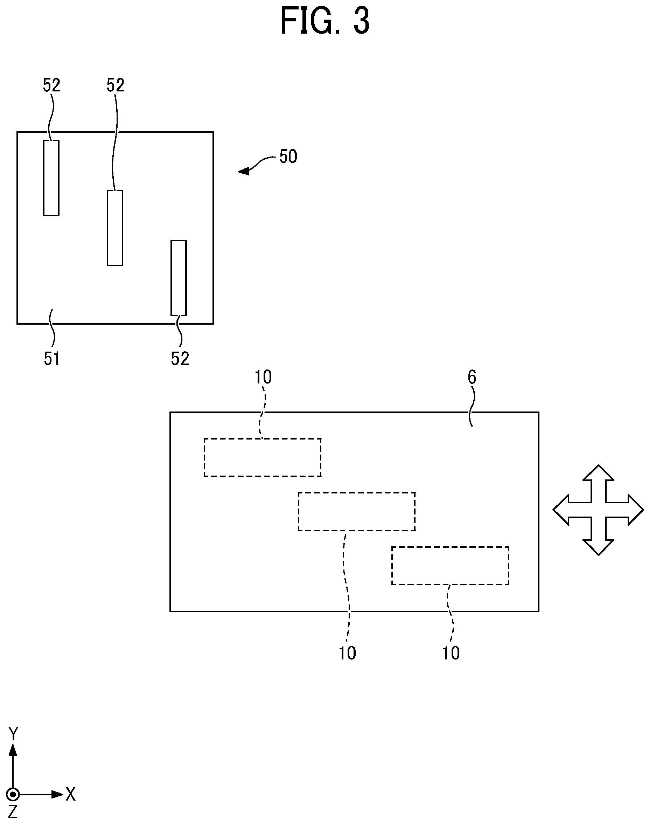

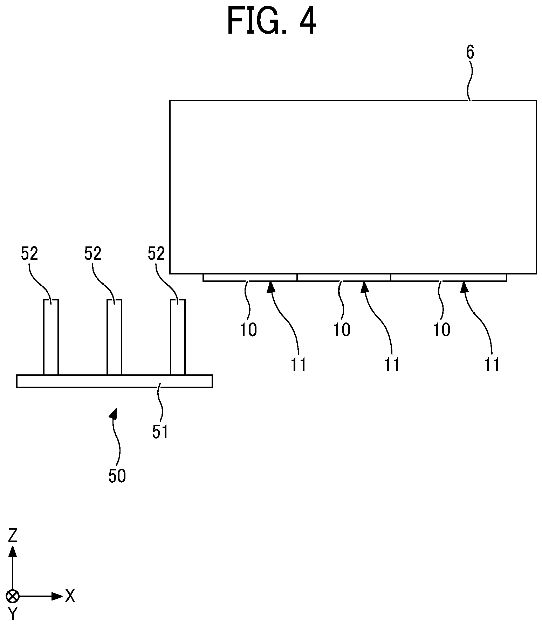

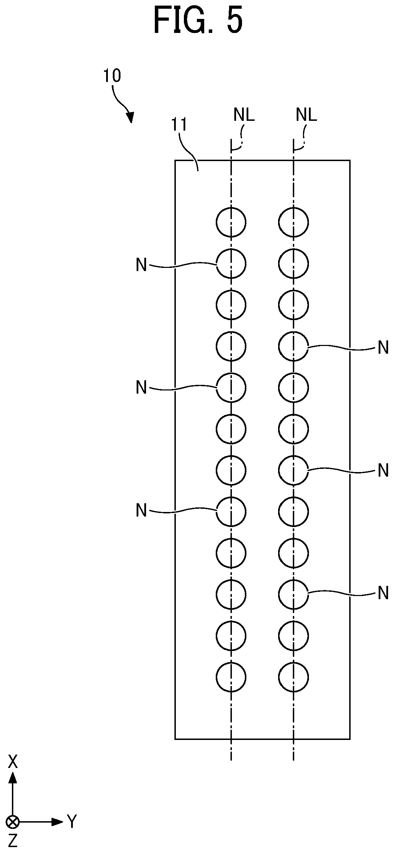

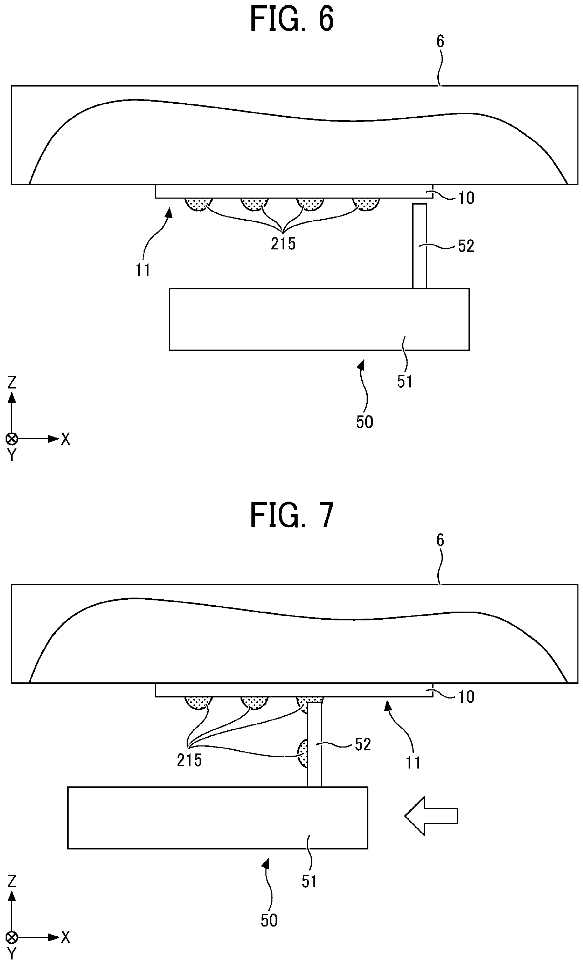

An example of a three-dimensional fabricating apparatus 100 according to a first embodiment will be described with reference to FIGS. 1 to 13. FIG. 1 is a plan view of the three-dimensional fabricating apparatus 100 according to the first embodiment. FIG. 2 is a partial cross-sectional view of the three-dimensional fabricating apparatus 100 according to the first embodiment. FIG. 3 is a plan view of a carriage 6 including a plurality of discharge heads 10 and a cleaner 50. FIG. 4 is a side view of the carriage 6 including the plurality of discharge heads 10 and the cleaner 50. FIG. 5 is a bottom view of the discharge heads 10 having nozzle faces 11 on which the plurality of nozzles N is formed. FIG. 6 is a side view illustrating the cleaner 50 that executes non-contact cleaning on the nozzle face 11 of the discharge head 10. FIG. 7 is a side view illustrating the cleaner 50 that executes non-contact cleaning on the nozzle face 11 of the discharge head 10.

In FIG. 1, a powder supply device 2 is indicated by a virtual line. In each of the drawings, arrows indicating an X-axis direction, a Y-axis direction, and a Z-axis direction are appropriately illustrated as three directions orthogonal to one another. The X-axis direction is along the traveling direction of the powder supply device 2. The Y-axis direction is a direction intersecting the traveling direction of the powder supply device 2. The Z-axis direction is along the vertical direction.

FIGS. 1 and 2 illustrate the three-dimensional fabricating apparatus 100, powder 1, the powder supply device 2, a fabrication chamber 3, a recoating roller 4, a fabrication stage 5, the carriage 6, a state detector 7, a light source 8, an excess powder receiving chamber 9, the discharge heads 10, a discharge detector 12, and a layer 201. FIG. 2 illustrates the nozzle face 11. FIGS. 3 and 4 illustrate the discharge head 10, the carriage 6, the cleaner 50, a base 51, and wipers 52. FIG. 4 illustrates the nozzle faces 11. FIG. 5 illustrates the discharge head 10, the nozzle face 11, the nozzles N, and nozzle rows NL. FIGS. 6 and 7 illustrate the carriage 6, the discharge head 10, the nozzle face 11, adherence matter 215, the cleaner 50, the base 51, and the wiper 52.

The three-dimensional fabricating apparatus 100 fabricates a three-dimensional object by repeating a step of laminating powder 1 such as resin, metal, or ceramics, and discharging and solidifying liquid droplets by an inkjet method. Although the powder 1 is assumed as adherence matter that is adherable to the discharge head 10, the adherence matter is not limited to the powder 1 and may be other matter. For example, a liquid such as ink adhering to the discharge head 10 is also included in the adherence matter. The matter adhering to the discharge head 10 includes adherence matter on the nozzle face 11. The matter adherence to the discharge head 10 includes matter adhering to the side surfaces of the nozzles N. The side surfaces of the nozzles N may be inner peripheral surfaces of the nozzles N.

The three-dimensional fabricating apparatus 100 will be described on the premise of a Binder Jetting (BJ) type three-dimensional fabricating apparatus. However, the three-dimensional fabricating apparatus 100 is not limited to a BJ type three-dimensional fabricating apparatus. The three-dimensional fabricating apparatus 100 may be a High Speed Sintering (HSS) type three-dimensional fabricating apparatus, a Material Jet (MJ) type three-dimensional fabricating apparatus, or any other type of three-dimensional fabricating apparatus, for example.

The three-dimensional fabricating apparatus 100 includes the powder supply device 2, the fabrication chamber 3, the recoating roller 4, the discharge head 10, the carriage 6, the state detector 7, the light source 8, and the excess powder receiving chamber 9. The three-dimensional fabricating apparatus 100 includes the cleaner 50.

The powder supply device 2 has a hopper that stores the powder 1. The powder supply device 2 is movable above the fabrication chamber 3. The powder supply device 2 supplies the powder 1 into the fabrication chamber 3 while moving above the fabrication chamber 3.

The fabrication chamber 3 stores the powder 1 supplied from the powder supply device 2. The fabrication stage 5 is provided inside the fabrication chamber 3. The powder 1 supplied from the powder supply device 2 is deposited on the fabrication stage 5. A plurality of layers 201 is formed on the fabrication stage 5. The powder 1 supplied from the powder supply device 2 have a layer structure and forms a plurality of layers 201. For example, when the powder supply device 2 moves once in the X-axis direction, the first layer 201 is formed on the fabrication stage 5. After the formation of the first layer 201, the fabrication stage 5 is lowered to form a space in which the second layer 201 can be deposited on the first layer 201. Next, when the powder supply device 2 moves in the X-axis direction, the second layer 201 is formed on the first layer 201. When the powder supply device 2 moves a plurality of times, the plurality of layers 201 is formed in the fabrication chamber 3. The fabrication stage 5 is lowered as appropriate according to the number of the layers 201. As described above, the plurality of layers 201 are formed on the fabrication stage 5 by repeating the lowering of the fabrication stage 5 and the supply of the powder 1.

The recoating roller 4 moves in the X-axis direction on the fabrication chamber 3 together with the powder supply device 2. The recoating roller 4 moves while rotating to smooth the powder 1 on the surface of the fabrication chamber 3. The powder 1 supplied from the powder supply device 2 into the fabrication chamber 3 is leveled by the recoating roller 4.

The excess powder receiving chamber 9 is formed around the fabrication chamber 3. The excess powder receiving chamber 9 collects the powder 1 overflowed from the fabrication chamber 3. The excess powder 1 in the fabrication chamber 3 is drawn by the recoating roller 4 and falls into the excess powder receiving chamber 9. The powder 1 that has fallen into the excess powder receiving chamber 9 is collected from the bottom of the excess powder receiving chamber 9 and is returned to the powder supply device 2.

The supply of the powder 1 into the fabrication chamber 3 is not limited to supplying the powder 1 into the fabrication chamber 3 from the powder supply device 2 above the fabrication chamber 3. For example, the powder supply device 2 may supply the powder 1 onto a stage formed around the fabrication chamber 3, and the recoating roller 4 may scrape the powder 1 on the stage and supply the powder 1 into the fabrication chamber 3. The recoating roller 4 may be movable together with the powder supply device 2 or may be movable separately from the powder supply device 2. The three-dimensional fabricating apparatus 100 is not limited to the one that smooths the powder 1 by the recoating roller 4. For example, the three-dimensional fabricating apparatus 100 may smooth the powder 1 in the fabrication chamber 3 by a blade, or may smooth the powder 1 by another brush or the like.

The carriage 6 includes the plurality of discharge heads 10. The carriage 6 can move in the X-axis direction and the Y-axis direction, for example. The carriage 6 moves above the fabrication chamber 3 to convey the plurality of discharge heads 10. The carriage 6 can also move to a position away from above the fabrication chamber 3, and can also move from the position away from above the fabrication chamber 3 to above the fabrication chamber 3.

The discharge heads 10 discharge droplets. As illustrated in FIG. 5, each discharge head 10 has the nozzle face 11 formed on the bottom surface thereof. The nozzle face 11 has the plurality of nozzles N. The plurality of nozzles N constitutes a nozzle row NL arranged in the X-axis direction. The nozzle face 11 has the plurality of nozzle rows NL. Each discharge head 10 has pressure chambers communicating with the nozzles N. The plurality of nozzles N communicate with the plurality of corresponding pressure chambers. Each discharge head 10 includes an actuator that fluctuates the pressure of the liquid in the pressure chamber. The actuator increases the pressure of the liquid in the pressure chamber, and the discharge head 10 discharges the liquid from the nozzles N. The actuator includes a piezoelectric element, for example.

Each discharge head 10 discharges droplets onto the powder 1 in the fabrication chamber 3 to solidify the powder 1. Each discharge head 10 discharges droplets to the powder 1 on each layer 201. When the powder supply device 2 and the recoating roller 4 move above the fabrication chamber 3, the carriage 6 is arranged on the side of the fabrication chamber 3 and is on standby. After the surface of the powder 1 in the fabrication chamber 3 is smoothed by the recoating roller 4, the carriage 6 moves to above the fabrication chamber 3 and discharges droplets to predetermined positions to solidify the powder 1 at the predetermined positions. The three-dimensional fabricating apparatus 100 repeatedly solidifies the powder 1 on each layer 201 to fabricate a three-dimensional object.

The cleaner 50 illustrated in FIGS. 3 and 4 is arranged at a position separated from the fabrication chamber 3. The cleaner 50 is arranged at a position different from the state detector 7 and the light source 8. The cleaner 50 is an example of a non-contact cleaner. Alternatively, in some embodiments, the cleaner 50 may be a contact cleaner. The cleaner 50 includes the base 51 and the plurality of wipers 52. The wipers 52 are an example of a non-contact wiper. The base 51 supports the plurality of wipers 52. The wipers 52 remove matter adhering to the nozzle faces 11 of the discharge heads 10 without contact with the nozzle faces 11. The wipers 52 remove matter adhering to the discharge heads 10 without contact with the discharge heads 10.

The wipers 52 are movable relative to the nozzle faces 11 of the discharge heads 10. The wipers 52 have a predetermined length in the Y-axis direction. The length of the wipers 52 in the Y-axis direction corresponds to the region of the plurality of nozzles N formed on the nozzle face 11. For example, the wipers 52 are movable with respect to the stationary nozzle face 11. The wipers 52 can move in the X-axis direction in which the nozzle rows NL extend. The wipers 52 can move in the Y-axis direction, which is the short-side direction of the nozzle face 11. The discharge head 10 may be moved with respect to the wipers 52 in the stationary state. The wipers 52 can scrape off and remove the adherence matter 215 adhering to the nozzle face 11.

FIG. 6 illustrates a state before the non-contact cleaning is performed by the cleaner 50. FIG. 7 illustrates a state in which the non-contact cleaning is being executed by the cleaner 50. The adherence matter 215, which is a droplet, for example, adheres to the nozzle face 11 of the discharge head 10. The adherence matter 215 adhering to the nozzle face 11 can be removed by moving the wiper 52 relative to the nozzle face 11. As the liquid adhering to the nozzle face 11, some of the droplets discharged from the nozzles N adheres to the nozzle face 11 and become the adherence matter 215. After cleaning the nozzles N with a cleaning liquid, a portion of the cleaning liquid may remain on the nozzle face 11 and become the adherence matter 215. The adherence matter 215 adhering to the nozzle face 11 is not limited to a liquid, and may include a portion of the medium, for example. The medium that is the powder 1 may adhere to the nozzle face 11.

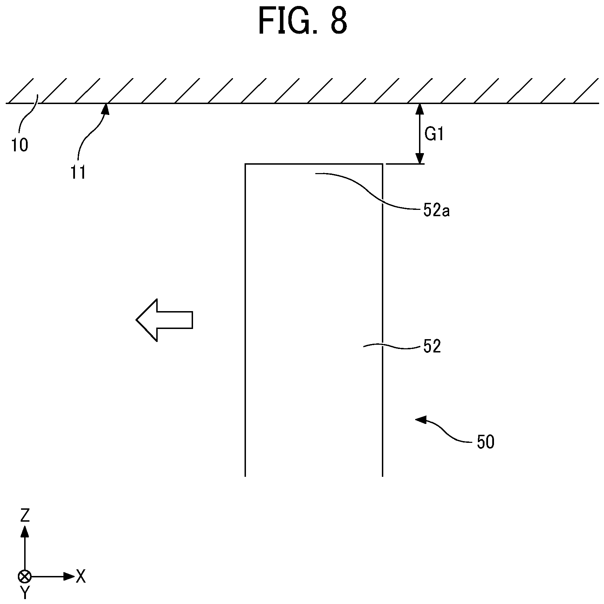

FIG. 8 is a side view of a gap G1 between the nozzle face 11 of the discharge head 10 and the wiper 52. FIG. 8 illustrates the nozzle face 11 of the discharge head 10, the wiper 52 of the cleaner 50, a distal end portion 52a of the wiper 52, and the gap G1 between the distal end portion 52a and the nozzle face 11. The wiper 52 is an example of a non-contact wiper. The wiper 52 is arranged with the gap G1 from the nozzle face 11. The gap G1 may be 1 mm or less, for example.

The wiper 52 can remove adherence matter larger than the gap G1 from the nozzle face 11. On the other hand, the wiper 52 cannot remove adherence matter smaller than the gap G1. In the three-dimensional fabricating apparatus 100, the contact cleaning can be executed after the non-contact cleaning is executed.

As a method of reducing the probability of occurrence of a discharge abnormality after the non-contact cleaning using the non-contact wipers, the non-contact wipers may be brought close to the nozzle faces 11 as much as possible. There is also a method of reducing the probability of occurrence of discharge abnormality by changing the material of the non-contact wipers. There is also a method of reducing the probability of occurrence of discharge abnormality by adjusting the surface tension and viscosity of the liquid discharged from the nozzles N. There is also a method of reducing the probability of occurrence of discharge abnormality by adjusting the surface tension and viscosity of the cleaning liquid used for nozzle cleaning.

For example, in the binder-jet type three-dimensional fabricating apparatus 100, there is a possibility that discharge abnormality occurs due to adhesion of fabrication powder (powder 1) of several tens of microns as a recording medium to the nozzle faces 11. When the powder 1 adheres to the nozzle faces 11, it is not easy to remove the powder 1 using the non-contact wipers because the powder 1 is small. Therefore, it is necessary to remove the adherence matter adhering to the nozzle faces 11 and the adherence matter existing in the nozzles N by performing a purge operation for washing away the powder 1 adhering to the nozzle faces 11 and a cleaning operation of the nozzles N with a cleaning liquid.

In the purge operation, the adherence matter adhering to the inner peripheral surfaces of the nozzles N can be removed by flowing out a liquid from the nozzles N. For example, in the discharge heads 10, in a state where no purge operation is performed, the inside of the nozzles N is brought under a negative pressure so that the liquid does not drip from the nozzles N. In the case of performing the purge operation, the discharge heads 10 pressurize the liquid from the inside of the discharge heads 10 and drip the liquid from the nozzles N. Accordingly, the liquid flowing out from the nozzles N washes away the adherence matter existing in the nozzles N. The discharge heads 10 can drip the liquid from the nozzles N by switching the inside of the nozzles N from the negative pressure state to the pressurized state. The discharge heads 10 can pressurize the liquid in the nozzles N by driving a piezoelectric element that applies pressure to the liquid in the pressure chamber. The three-dimensional fabricating apparatus 100 can switch the nozzles N from a positive pressure to a negative pressure using a pump for supplying the liquid to the discharge heads 10.

In the non-contact cleaning operation using the wipers 52, the liquid remaining on the nozzle faces 11 after the purge operation can be removed and the liquid remaining on the nozzle faces 11 after the cleaning of the nozzles N with the cleaning liquid can be removed. In the non-contact cleaning operation using the wipers 52, the adherence matter adhering to the discharge heads 10 can be removed.

On the other hand, in the contact cleaning operation, the adherence matter adhering to the nozzle faces 11 are removed by bringing the distal end portions 52a of the wipers 52 into contact with the nozzle faces 11. In the contact cleaning operation, ink (liquid) adhering to the nozzle faces 11, a mixture of the ink and the powder 1, and the like can be removed. In the contact cleaning operation, a rubber blade can be used. In the contact cleaning operation, the wipers 52 are brought into contact with the nozzle faces 11 and moved, so that the adherence matter adhering to the nozzle faces 11 can be removed. When the frequency of the contact cleaning operation increases, durability of water-repellent films or the like on the nozzle faces 11 may decrease. In the contact cleaning operation, the adherence matter adhering to the discharge heads 10 can be removed.

After the non-contact cleaning operation, adherence matter may remain on the nozzle faces 11 and in the nozzles N. If the adherence matter remains in any of the nozzles N, a meniscus may not be formed in the nozzle N. Similarly, if the adherence matter adhering to the nozzle face 11 is scattered on any of the nozzles N, there is a possibility that a meniscus is not formed in the nozzle N. If no meniscus is formed in the nozzle N, the nozzle N cannot discharge a liquid. If the adherence matter adheres to the periphery of any of the nozzles N, there is a possibility that the liquid discharged from the nozzle N comes into contact with the adherence matter adhering to the periphery of the nozzle N, and the liquid may be discharged from the nozzle N in a different direction. In addition, if the adherence matter remains in any of the nozzles N, the liquid may be discharged from the nozzle N in a different direction. If the adherence matter remains in any of the nozzles N, the amount of the discharged liquid may be insufficient.

The three-dimensional fabricating apparatus 100 can lift and lower the wipers 52. The three-dimensional fabricating apparatus 100 includes a wiper lifting mechanism that lifts and lowers the base 51 and the wipers 52. The wiper lifting mechanism includes a motor that lifts and lowers the wipers 52, for example. The wipers 52 are movable toward or away from the nozzle faces 11. The three-dimensional fabricating apparatus 100 can perform the contact cleaning operation by bringing the wipers 52 into contact with the nozzle faces 11. The three-dimensional fabricating apparatus 100 can execute the non-contact cleaning operation by separating the wipers 52 from the nozzle faces 11 and providing the gap G1. The wipers 52 have functions of both a non-contact wiper and a contact wiper.

The three-dimensional fabricating apparatus 100 uses the wipers 52 to perform both the non-contact cleaning operation and the contact cleaning operation. The three-dimensional fabricating apparatus 100 can switch between the non-contact cleaning operation and the contact cleaning operation according to the state of the discharge heads 10. The three-dimensional fabricating apparatus 100 can suppress a decrease in durability of the nozzle faces 11 and improve reliability with a simple configuration. The three-dimensional fabricating apparatus 100 can change the operation of the three-dimensional fabricating apparatus 100 according to the state of the discharge heads 10. The three-dimensional fabricating apparatus 100 may change the fabrication operation of the three-dimensional fabricating apparatus 100 according to the state of the discharge heads 10.

The three-dimensional fabricating apparatus 100 may include a nozzle cleaning mechanism that performs nozzle cleaning with a cleaning liquid. The nozzle cleaning mechanism includes, for example, a cleaning liquid tank for storing a cleaning liquid, a pump for transferring the cleaning liquid, a flow path through which the cleaning liquid flows, and the like. The nozzle cleaning mechanism also includes a switching valve that switches the flow path so that the cleaning liquid tank communicates with the nozzles N. The nozzle cleaning is included in the cleaning of the discharge heads 10.

As illustrated in FIGS. 1 and 2, the state detector 7 and the light source 8 are arranged at positions separated from the fabrication chamber 3 in the X-axis direction. The state detector 7 is an example of a detector that detects the state of the discharge heads 10. The state detector 7 and the light source 8 are arranged below the discharge heads 10 that are on standby at positions deviated from the fabrication chamber 3. The state detector 7 is an optical camera, for example. The state detector 7 can image the nozzle faces 11 and detect the states of the nozzle faces 11. The state detector 7 can detect adherence matter adhering to the nozzle faces 11, for example. The state detector 7 can detect clogging of the nozzles N. The light source 8 can irradiate the nozzle faces 11 with light. The state detector 7 can detect the state of the nozzles N. The state detector 7 can detect adherence matter remaining in the nozzles N.

The three-dimensional fabricating apparatus 100 can capture an image of the nozzle face 11 and perform image processing to determine the presence or absence of discharge abnormality in the discharge head 10. The three-dimensional fabricating apparatus 100 can detect the discharge abnormality merely by capturing an image of the nozzle face 11 and performing the image processing, without actually discharging droplets from the discharge head 10. Thus, the three-dimensional fabricating apparatus 100 can speed up the operation for detecting discharge abnormality. The three-dimensional fabricating apparatus 100 can shorten the operation time for detecting discharge abnormality.

The carriage 6 can convey and move the discharge head 10 to above the state detector 7 and the light source 8. The carriage 6 can move the discharge head 10 to a predetermined position at the time of observation of the nozzle face 11 by the state detector 7. Even if the entire nozzle face 11 cannot be observed at a time, the state detector 7 can observe the entire nozzle face 11 for a plurality of times by appropriately moving the discharge head 10. The state detector 7 may observe the entire nozzle face 11 at a time without moving the discharge head 10.

The state detector 7 is not limited to the optical camera, and may be a laser displacement meter or another device, for example. The laser displacement meter can stereoscopically capture the shape of the nozzle face 11. The state detector 7 may be merely able to observe the nozzle face 11 and the nozzles N.

The light source 8 may emit light with a wavelength capable of distinguishing the nozzle face 11 from the powder 1. The light source 8 can emit light at a predetermined angle to the nozzle face 11. In order to stereoscopically capture the powder 1 adhering to the nozzle face 11 by the optical camera, the state detector 7 may observe the nozzle face 11 in a state where the light source 8 irradiates the nozzle face 11 with striped light having a plurality of widths.

The three-dimensional fabricating apparatus 100 includes the discharge detector 12 that detects discharge the abnormality of the nozzles N. The discharge detector 12 detects the discharge abnormality from the printed image. The discharge head 10 actually discharges droplets from the nozzles N to perform printing, and the discharge detector can detect the discharge abnormality from the printed image. The three-dimensional fabricating apparatus 100 may discharge droplets from the individual nozzles N a plurality of times, measure the electric quantities of the landing destinations of the droplets, and detect the discharge abnormality from the measurement results. The three-dimensional fabricating apparatus 100 may detect the discharge abnormality by discharging droplets from the nozzles N and detecting the droplets crossing detection light using an optical sensor. A person skilled in the art may appropriately design a method of detecting discharge abnormality in consideration of the sizes of droplets discharged from the nozzles N, the speed of the discharged droplets, the type of the droplets (the type of ink, for example, whether the ink is transparent), and further in consideration of the conditions of the three-dimensional fabricating apparatus 100. The discharge detector 12 detects droplets discharged from nozzles N. The discharge detector 12 may observe droplets that have been landed on a medium after discharged from the nozzles N. Alternatively, the discharge detector 12 may observe droplets that are flying. The discharge detector 12 is an example of a detector. The detector that detects the state of the discharge head 10 may detect the state of the nozzle face 11 or detect droplets discharged from the nozzles N.

### Hardware Configuration

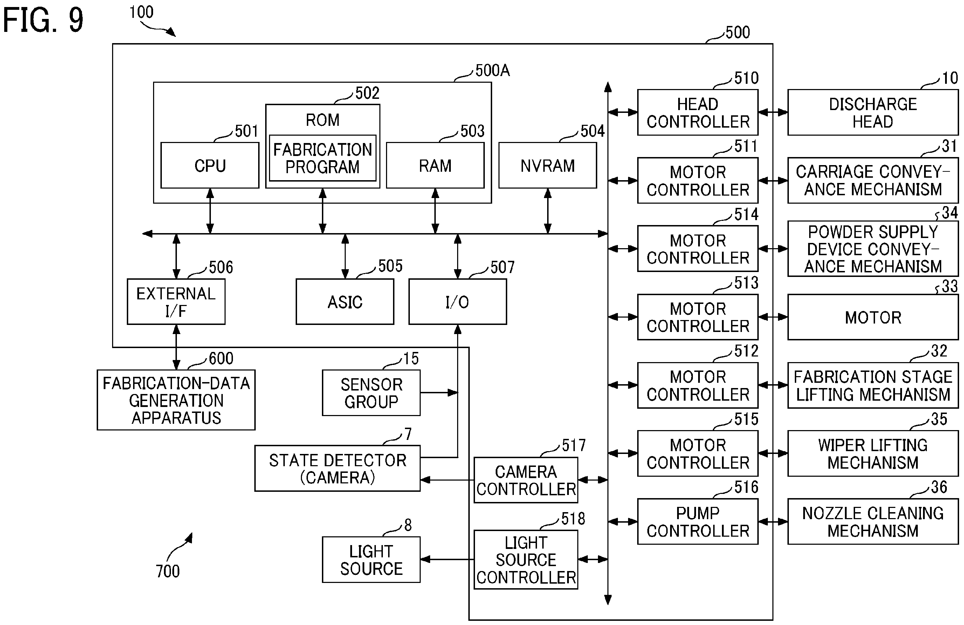

Next, a hardware configuration of the three-dimensional fabricating apparatus according to the first embodiment will be described with reference to FIG. 9. FIG. 9 is a block diagram illustrating the hardware configuration of the three-dimensional fabricating apparatus according to the first embodiment.

FIG. 9 illustrates a controller 500, a central processing unit (CPU) 501, a read only memory (ROM) 502, a random access memory (RAM) 503, a non-volatile random access memory (NVRAM) 504, an application specific integrated circuit (ASIC) 505, an external interface (I/F) 506, an input/output (I/O) 507, a head controller 510, motor controllers 511 to 515, a pump controller 516, and a camera controller 517 of the three-dimensional fabricating apparatus 100. FIG. 9 illustrates the discharge head 10, the carriage conveyance mechanism 31, the fabrication stage lifting mechanism 32, the motor 33, the powder supply device conveyance mechanism 34, the wiper lifting mechanism 35, the nozzle cleaning mechanism 36, the state detector 7, the light source 8, and the sensors 15. FIG. 9 illustrates a fabrication-data generation apparatus 600 of a three-dimensional fabricating system 700.

The three-dimensional fabricating apparatus 100 includes the controller 500. The controller 500 includes the CPU 501, the ROM 502, the RAM 503, and the NVRAM 504. The CPU 501 controls the entire three-dimensional fabricating apparatus 100. The ROM 502 stores various programs such as fabricating programs for causing the CPU 501 to execute three-dimensional fabricating control, fixed data, and the like. The ROM 502 stores programs for executing an observation operation of the nozzle faces 11 of the discharge heads 10.

The RAM 503 temporarily stores fabrication data and the like. The NVRAM 504 is a nonvolatile memory, and can hold data even while the power supply of the three-dimensional fabricating apparatus 100 is cut off. The controller 500 includes a main controller 500A, and the main controller 500A includes the CPU 501, the ROM 502, and the RAM 503.

The controller 500 includes the ASIC 505. The ASIC 505 processes input and output signals for controlling the entire three-dimensional fabricating apparatus 100. The ASIC 505 can also execute various types of signal processing on the image data. The ASIC 505 can execute image processing on the captured image of the nozzle face 11 acquired by the camera that is the state detector 7.

The controller 500 includes the external interface (external I/F) 506 for transmitting and receiving fabrication data and the like to and from the fabrication-data generation apparatus 600 that is an external apparatus. The fabrication-data generation apparatus 600 is an apparatus that generates fabrication data obtained by slicing the fabrication object of the final form into fabrication layers. The fabrication-data generation apparatus 600 includes an information processing device such as a personal computer device.

The controller 500 also includes the input/output unit (I/O) 507 for capturing detection signals output from the sensors 15. The controller 500 includes the head controller 510 that controls the driving of the discharge head 10. The head controller 510 can control an actuator of the discharge head 10. The head controller 510 can execute liquid discharge by controlling the actuator of the discharge head 10. The head controller 510 can control the actuator of the discharge head 10 to execute a purge operation for washing away adherence matter adhering to the nozzle face 11.

The controller 500 includes the various motor controllers 511 to 515. The three-dimensional fabricating apparatus 100 includes the carriage conveyance mechanism 31 that moves the carriage 6, the fabrication stage lifting mechanism 32 that lifts and lowers the fabrication stage 5, the motor 33 that rotates the recoating roller 4, the powder supply device conveyance mechanism 34 that conveys the powder supply device 2 and the recoating roller 4, and the wiper lifting mechanism 35 that lifts and lowers the wipers 52. The motor controller 511 controls the motor of the carriage conveyance mechanism 31. The motor controller 512 controls the motor of the fabrication stage lifting mechanism 32. The motor controller 513 controls the motor 33 that rotates the recoating roller 4. The motor controller 514 controls the motor of the powder supply device conveyance mechanism 34. The motor controller 515 controls the motor of the wiper lifting mechanism 35.

The three-dimensional fabricating apparatus 100 includes the nozzle cleaning mechanism 36. The controller 500 includes the pump controller 516 that controls the pump of the nozzle cleaning mechanism 36. The controller 500 can control the pump controller 516 to perform nozzle cleaning with a cleaning liquid.

The controller 500 also includes the light source controller 518 that controls the light source 8. The light source controller 518 can control the light source 8 to irradiate the nozzle face 11 with predetermined light.

A camera is electrically connected as the state detector 7 to the I/O 507. The data acquired by the state detector 7 is input to the controller 500 via the I/O 507.

The three-dimensional fabricating system 700 includes the three-dimensional fabricating apparatus 100 and the fabrication-data generation apparatus 600.

### Functional Configuration

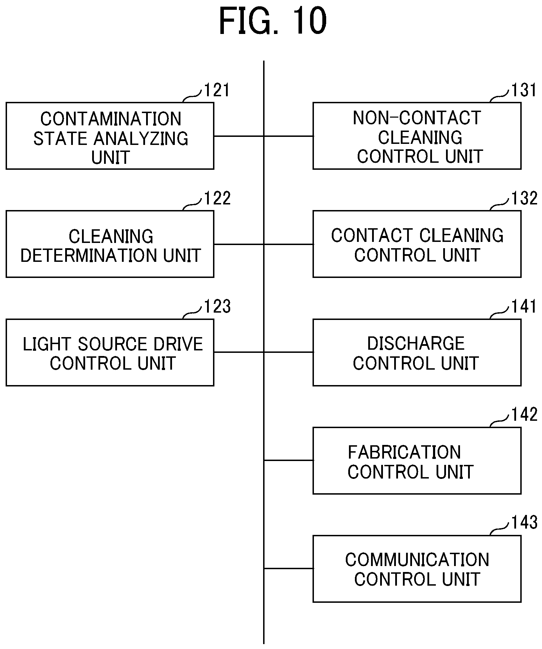

Next, a functional configuration of the three-dimensional fabricating apparatus 100 according to the first embodiment will be described with reference to FIG. 10. FIG. 10 is a functional block diagram of the three-dimensional fabricating apparatus according to the first embodiment. FIG. 10 illustrates a contamination state analyzing unit 121, a cleaning determination unit 122, a light source drive control unit 123, a non-contact cleaning control unit 131, a contact cleaning control unit 132, a discharge control unit 141, a fabrication control unit 142, and a communication control unit 143.

The CPU 501 illustrated in FIG. 8 executes programs stored in a storage unit such as the ROM 502 to implement the functions of the contamination state analyzing unit 121, the cleaning determination unit 122, the light source drive control unit 123, the non-contact cleaning control unit 131, the contact cleaning control unit 132, the discharge control unit 141, the fabrication control unit 142, and the communication control unit 143 illustrated in FIG. 10. The contamination state analyzing unit 121 analyzes the state of contamination on the nozzle face 11. The cleaning determination unit 122 can determine whether to execute a non-contact cleaning operation based on the contamination state of the nozzle face 11. The cleaning determination unit 122 can determine whether to end the non-contact cleaning operation based on the contamination state of the nozzle face 11. The cleaning determination unit 122 can determine whether to execute a contact cleaning operation based on the contamination state of the nozzle face 11.

The non-contact cleaning control unit 131 controls the execution of the non-contact cleaning operation. The contact cleaning control unit 132 controls a contact cleaning operation. The discharge control unit 141 controls discharge of a liquid by the discharge head 10. The fabrication control unit 142 controls the fabrication of a three-dimensional object. The fabrication control unit 142 controls supply of the powder 1 to the fabrication chamber 3, lifting and lowering of the fabrication stage 5, and the like. The communication control unit 143 controls communication with the fabrication-data generation apparatus 600 and the like connected to the controller 500. The communication control unit 143 controls communication with an external device connected to the controller 500.

The contamination state analyzing unit 121, the cleaning determination unit 122, the light source drive control unit 123, the non-contact cleaning control unit 131, the contact cleaning control unit 132, the discharge control unit 141, the fabrication control unit 142, and the communication control unit 143 can be implemented by software through programs stored in the storage. All or some of them may be implemented by hardware such as an integrated circuit (IC).

The programs are recorded as file information in an installable format or an executable format in a computer-readable recording medium such as a CD-ROM or a flexible disk (FD), and can be provided to the three-dimensional fabricating apparatus 100 via the recording medium. Furthermore, the programs are recorded on a computer-readable recording medium such as a CD-R, a digital versatile disk (DVD), a Blu-ray (registered trademark) disk, or a semiconductor memory, and can be provided to the three-dimensional fabricating apparatus 100 via such a recording medium. The programs may be provided to the three-dimensional fabricating apparatus 100 in a mode of being installed via a network such as the Internet. The programs may be incorporated in advance in a ROM or the like in the three-dimensional fabricating apparatus 100.

### Operation of Three-Dimensional Fabricating Apparatus

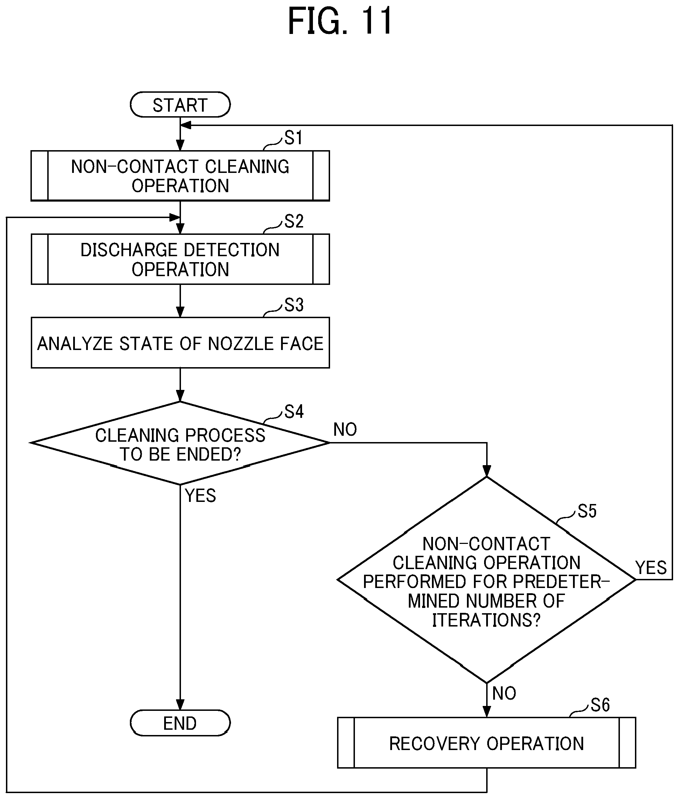

Next, a cleaning process executed by the three-dimensional fabricating apparatus 100 will be described with reference to FIG. 11. FIG. 11 is a flowchart of a procedure of the cleaning process executed by the three-dimensional fabricating apparatus 100.

In step S 1, the CPU 501 controls the carriage conveyance mechanism 31 and the cleaner 50 so as to execute a non-contact cleaning operation. For example, the non-contact cleaning operation in step S1 is performed when the powder 1 is supplied to the fabrication chamber 3 and the recoating roller 4 is smoothing the layer 201 of the powder 1.

In step S2, the CPU 501 controls the carriage conveyance mechanism 31, the state detector 7, and the light source 8 so as to execute a discharge detecting operation. In the discharge detecting operation, the camera as the state detector 7 captures an image of the nozzle face 11 of the discharge head 10. The CPU 501 can detect the amount of adherence matters on the nozzle face 11 based on the imaging data of the nozzle face 11. The CPU 501 can detect the clogging state of the nozzles N based on the imaging data of the nozzle face 11. The carriage conveyance mechanism 31 moves the carriage 6 to arrange the discharge head 10 at an appropriate position. The light source 8 irradiates the nozzle face 11 with light. The state detector 7 can capture an image of the nozzle face 11 irradiated with light.

In step S3, the CPU 501 determines the contamination state of the nozzle face 11 based on the acquired imaging data. The CPU 501 functions as a contamination state analyzer. The CPU 501 may calculate the closing rate of the nozzles N. The CPU 501 may calculate the number of non-dischargeable nozzles from which droplets cannot be discharged. The CPU 501 may calculate the amount of adherence matter adhering to the nozzle face 11. The amount of the adherence matter may be the ratio of an area to which the adherence matter adheres. The amount of adherence matter may be the thickness of the adherence matter adheres to the nozzle face 11.

In step S4, the CPU 501 determines whether to end the cleaning process on the basis of the state of the discharge head 10 which is the detection result acquired by the state detector 7. The state of the discharge head 10 can include the state of the nozzles N. The state of the discharge head 10 can include the state of the nozzle face 11. If the CPU 501 determines that the cleaning process is to be ended (step S4: YES), the cleaning process here ends. If the CPU 501 determines that the cleaning process is not to be ended (step S4: NO), the process proceeds to step S5.

For example, a person skilled in the art can design the criterion for determination in step S4 in view of the influence of the non-discharge of droplets from the nozzle N on the fabrication of the object. For example, if the number of non-discharging nozzles N is equal to or larger than the determination criterion, the CPU 501 can determine that the cleaning process is not to be ended. If two adjacent nozzles N are not discharging, the CPU 501 can determine that the cleaning process is not to be ended.

The determination criterion in step S4 may be changed according to the target value of reliability of the object fabricated by the three-dimensional fabricating apparatus 100. The CPU 501 may set a high determination criterion when the target value of reliability of the fabricated object is high, as compared to when the target value of reliability of the fabricated object is low. The high determination criterion here means that the criterion for determining that the cleaning process is not to be ended is high. For example, even if the contamination state of the nozzle face 11 is the same, the CPU 501 may determine that the cleaning process is not to be ended when the reliability of the target value is high, and may determine that the cleaning process is to be ended when the reliability of the target value is low. The target value of reliability of the fabricated object being high means that the accuracy of fabrication of the object is high, for example.

In step S5, the CPU 501 determines whether the number of iterations of the non-contact cleaning operation is equal to or less than a predetermined number. If the number of iterations of the non-contact cleaning operation is equal to or less than the predetermined number (step S5: YES), the process returns to step S1, and the non-contact cleaning operation is repeated. After end of step S 1, steps S2 to S4 are executed again.

When the number of iterations of the non-contact cleaning operation exceeds the predetermined number (step S6: NO), the process proceeds to step S6. In step S6, the cleaner 50 performs the contact cleaning operation. After the contact cleaning operation is performed in step S6, the process returns to step S2 to perform the discharge detection operation. After end of step S2, steps S3 and S4 are executed again.

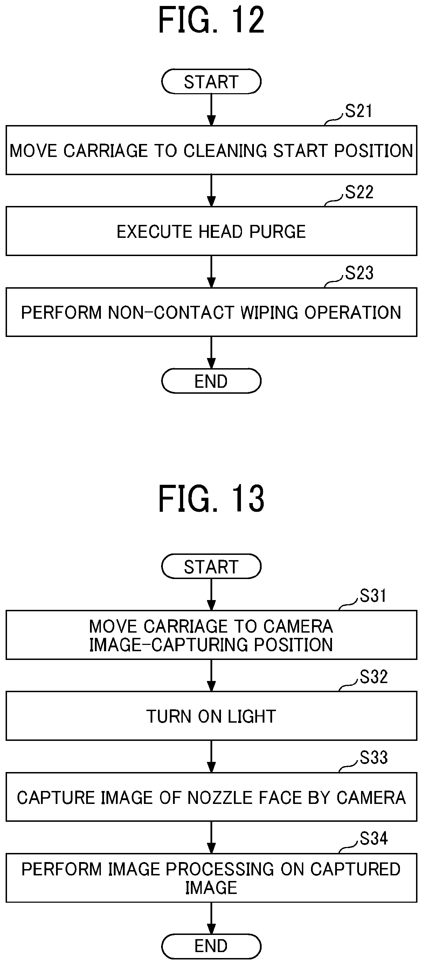

Next, a procedure of the non-contact cleaning operation will be described with reference to FIG. 12. FIG. 12 is a flowchart of the procedure of the non-contact cleaning operation. The non-contact cleaning operation illustrated in FIG. 12 is an example of the non-contact cleaning operation executed in step S1 of FIG. 11.

The non-contact cleaning operation is started in accordance with a cleaning operation start command output from the CPU 501. In response to the start command output from the CPU 501, the carriage conveyance mechanism 31 moves the carriage 6 to the start position of the cleaning operation (step S21). The start position of the cleaning operation may be any position.

Next, the discharge head 10 executes a purge operation (step S22). In response to a command signal from the CPU 501, the head controller 510 controls the discharge head 10 to flow out droplets from the nozzles N and wash off adherence matter from the nozzle face 11 around the nozzles N. In the purge operation, the amount of liquid discharged from the nozzles N is appropriately set in consideration of the frequency of the cleaning operation, the size of the adherence matter adhering to the nozzle face 11, the gap G1 between the wipers 52 and the nozzle face 11, the physical properties of the liquid, and the like.

In the three-dimensional fabricating apparatus 100, the nozzles N may be cleaned using a cleaning liquid instead of the purge operation. In response to a command signal from the CPU 501, the pump controller 516 controls the pump to perform nozzle cleaning with a cleaning liquid. As a result, it is possible to wash away adherence matter remaining in the nozzles N and adherence matter adhering to the nozzle face 11 around the nozzles N. In the three-dimensional fabricating apparatus 100, in the nozzle cleaning using a cleaning liquid, the pressure of the liquid in the discharge head 10 can be controlled to a pressure (second pressure) higher than a pressure (first pressure) at the time of discharging normal droplets.

After step S22, the CPU 501 proceeds to step S23 and performs a non-contact wiping operation. The motor controller 511 controls the motor of the carriage conveyance mechanism 31 to move the carriage 6. The carriage 6 moves the discharge head 10 above the wipers 52 to perform the non-contact wiping operation. In the non-contact wiping operation, the wipers 52 functioning as non-contact wipers are used to remove deposits adhering to the nozzle face 11. At the end of step S23, the CPU 501 ends the non-contact cleaning operation. At the end of the non-contact cleaning operation illustrated in FIG. 12, the CPU 501 executes the discharge detecting operation (step S2) illustrated in FIG. 11.

Next, a procedure of the discharge detecting operation will be described with reference to FIG. 13. FIG. 13 is a flowchart of a procedure of the discharge detecting operation. The discharge detecting operation illustrated in FIG. 13 is an example of the discharge detecting operation executed in step S2 of FIG. 11.

First, in step S31, in response to a command signal from the CPU 501, the motor controller 511 controls the motor of the carriage conveyance mechanism 31 to move the carriage 6 to the camera shooting position.

In step S32, the light source controller 518 turns on the light source 8 in response to a command signal from the CPU 501. Thus, the nozzle face 11 can be illuminated with light emitted from the light source 8.

In step S33, in response to a command signal from the CPU 501, the camera controller 517 controls the camera and captures an image of the nozzle face 11. The controller 500 inputs data of the image of the nozzle face 11 captured by the camera via the I/O 507.

In step S34, image processing of the captured image is performed. The ASIC 505 of the controller 500 performs image processing on the captured image of the nozzle face 11. At the end of step S34, the discharge detecting operation ends. At the end of the discharge detecting operation, the controller 500 analyzes the state of the discharge head 10 in step S4 illustrated in FIG. 11.

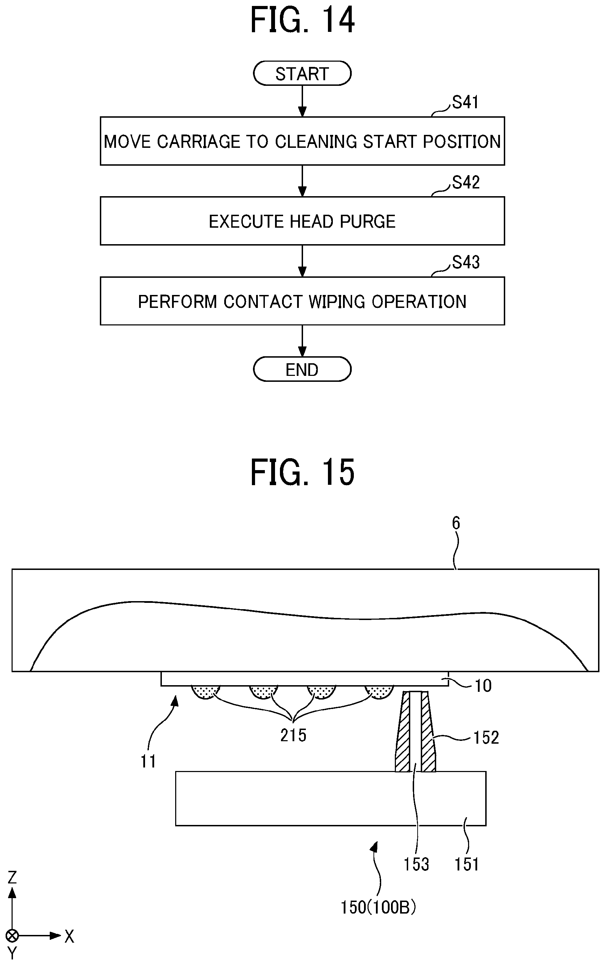

Next, a procedure of the contact cleaning operation will be described with reference to FIG. 14. FIG. 14 is a flowchart of the procedure of the contact cleaning operation. The contact cleaning operation illustrated in FIG. 14 is an example of the contact cleaning operation executed in step S6 of FIG. 11.

The contact cleaning operation is started based on a command output from the CPU 501. In response to the command output from the CPU 501, the carriage conveyance mechanism 31 moves the carriage 6 to the start position of the cleaning operation (step S41). The start position of the cleaning operation may be any position.

Next, the discharge head 10 executes a purge operation (step S42). In response to a command signal from the CPU 501, the head controller 510 controls the discharge head 10 to flow out droplets from the nozzles N and wash off adherence matter from the nozzle face 11 around the nozzles N. In the purge operation, the amount of liquid discharged from the nozzles N is appropriately set in consideration of the frequency of the cleaning operation, the size of the adherence matter adhering to the nozzle face 11, the gap G1 between the wipers 52 and the nozzle face 11, the physical properties of the liquid, and the like.

After execution of step S42 by the CPU 501, the process proceeds to step S43. In step S43, the CPU 501 executes a contact wiping operation. The motor controller 515 controls the wiper lifting mechanism 35 in response to a command from the CPU 501. The wiper lifting mechanism 35 lifts the wipers 52 to bring the distal end portions 52a of the wipers 52 into contact with the nozzle face 11. Thus, the wipers 52 can function as contact wipers. The motor controller 511 controls the motor of the carriage conveyance mechanism 31 to move the carriage 6. The carriage 6 moves the discharge head 10 above the wipers 52 to perform the contact wiping operation. In the contact wiping operation, the wipers 52 functioning as contact wipers are used to remove deposits adhering to the nozzle face 11. After performing the contact wiper operation, the wiper lifting mechanism 35 lowers the wipers 52 to provide the gap G1 between the distal end portions 52a of the wipers 52 and the nozzle face 11. The wipers 52 may be lowered before the non-contact cleaning operation is performed. At the end of step S43, the CPU 501 ends the contact cleaning operation. At the end of the contact cleaning operation illustrated in FIG. 14, the CPU 501 executes the discharge detecting operation (step S2) illustrated in FIG. 11.

After the end of the series of cleaning operations illustrated in FIG. 11, the three-dimensional fabricating apparatus 100 can perform liquid discharge by the discharge head 10 to fabricate a three-dimensional object. The controller 500 controls the carriage conveyance mechanism 31 to move the carriage 6 above the fabrication chamber 3. The controller 500 controls the discharge head 10 to discharge a liquid to the powder 1 in the fabrication chamber 3. The three-dimensional fabricating apparatus 100 solidifies the powder 1 to fabricate a fabrication object.

The three-dimensional fabricating apparatus 100 can control the operation of the three-dimensional fabricating apparatus 100 according to the state of the discharge head 10. The three-dimensional fabricating apparatus 100 can control the liquid discharge operation in the discharge head 10 according to the state of the discharge head 10. The three-dimensional fabricating apparatus 100 can control the fabrication operation in the three-dimensional fabricating apparatus 100 according to the state of the discharge head 10. The three-dimensional fabricating apparatus 100 may stop the fabrication operation when a discharge abnormality in the discharge head 10 is detected.

According to the three-dimensional fabricating apparatus 100, the cleaning of the nozzle face 11 can be controlled according to the state of the nozzle face 11. If the amount of adherence matters adhering to the nozzle face 11 is large, the controller 500 can execute the contact cleaning operation as a recovery operation. Therefore, contamination that cannot be removed by the non-contact cleaning operation can be removed by the contact cleaning operation.

If the amount of adherence matter adhering to the nozzle face 11 is small, the three-dimensional fabricating apparatus 100 does not perform the contact cleaning operation so that the frequency of the contact cleaning operation can be reduced. Therefore, the three-dimensional fabricating apparatus 100 can suppress damage to the nozzle face 11. As a result, the three-dimensional fabricating apparatus 100 can execute highly reliable cleaning while suppressing the damage of the nozzle face 11. The controller 500 can selectively execute the non-contact cleaning operation and the contact cleaning operation. The damage of the nozzle face 11 includes damage of the nozzle N. The damage of the nozzle N includes widening of the opening of the nozzle N.

In the three-dimensional fabricating apparatus 100, the controller 500 can detect the state of the nozzle face 11 and determine whether to end the cleaning operation according to the detection results. In the three-dimensional fabricating apparatus 100, after confirming that there is no non-discharge from the nozzles N after the non-contact cleaning, the discharge head 10 is moved onto the fabrication chamber 3 to start the discharge of droplets. The three-dimensional fabricating apparatus 100 can execute the non-contact cleaning before the discharge head 10 discharges droplets, and confirm that there is no adherence matter possibly affecting the discharge of droplets from the nozzles N on the nozzle face 11. The three-dimensional fabricating apparatus 100 discharges droplets after confirming the state of the nozzle face 11, thereby realizing highly reliable fabrication.

The three-dimensional fabricating apparatus 100 may include an internal pressure controller that controls the internal pressure of the discharge head 10. In the case of executing the nozzle cleaning by the nozzle cleaning mechanism, the internal pressure controller may control the internal pressure of the discharge head 10 to a second pressure higher than the first pressure for normal droplet discharge. The head controller 510 is an example of an internal pressure controller. The internal pressure of the discharge head 10 is the pressure of the pressure chamber of the discharge head 10, for example. The "normal droplet discharge" does not include the droplet discharge for cleaning the nozzle face 11 and the nozzles N. For example, the discharge of droplets in the purge operation is not included in the "normal droplet discharge". Discharge of a cleaning liquid is not included in the "normal droplet discharge". The "normal droplet discharge" includes a case of discharging ink (printing), a case of discharging a binder liquid in the three-dimensional fabricating apparatus 100, and the like, for example. The three-dimensional fabricating apparatus 100 can reliably remove the adherence matter remaining on the nozzles N and the adherence matter adhering to the nozzle face 11 around the nozzles N by performing the nozzle cleaning with the cleaning liquid at the second pressure higher than the first pressure for the normal droplet discharge. For example, the first pressure may be a negative pressure, and the second pressure may be a positive pressure.

The detector of the three-dimensional fabricating apparatus 100 may include a first detector and a second detector. The first detector includes a camera, for example. For example, the second detector may measure the amount of electricity at the landing destination of droplets to detect the non-discharge of the nozzles N. The first detector and the second detector may be any detector that can detect the state of the discharge head 10.

The nozzle face 11 includes the plurality of nozzles N. The "state of the discharge head 10" includes "non-discharge of nozzles" in which no droplets can be discharged due to the clogging of the nozzles N. The "state of the discharge head 10" includes a state in which adherence matter adheres to the peripheries of the nozzles N on the nozzle face 11 and the droplets discharged from the nozzles N are bent. The "state of the discharge head 10" includes a state in which no meniscus is formed in the nozzles N. The three-dimensional fabricating apparatus 100 may include a plurality of cameras as the first detector and the second detector. The three-dimensional fabricating apparatus 100 may include three or more detectors.

According to the three-dimensional fabricating apparatus 100, both durability and reliability of the discharge head 10 can be achieved. Improving the durability of the discharge head 10 extends the life of the discharge head 10. The reliability in the fabrication of the fabricated object can be enhanced by detecting the non-discharge of droplets from the nozzles N and appropriately recovering the nozzles N.

The three-dimensional fabricating apparatus 100 can perform the three-dimensional fabricating method according to the embodiment. The three-dimensional fabricating method includes the step of discharging droplets from the nozzles N, the step of detecting the state of the discharge head 10, the step of cleaning the discharge head 10 in a non-contact manner, and the step of controlling the operation of the three-dimensional fabricating apparatus 100 according to the state of the discharge head 10 after cleaning the discharge head 10 in a non-contact manner. The "cleaning" mentioned here may include non-contact cleaning alone or may include both non-contact cleaning and contact cleaning. The "step of cleaning" includes cleaning the nozzle face 11 and cleaning the inside of the nozzles N. The operation of the three-dimensional fabricating apparatus 100 includes a cleaning operation, a liquid discharge operation, and a fabricating operation. The operation of the three-dimensional fabricating apparatus 100 may include an operation of detecting the state of the discharge head 10, and an operation of fabricating a three-dimensional object.

### Second Embodiment

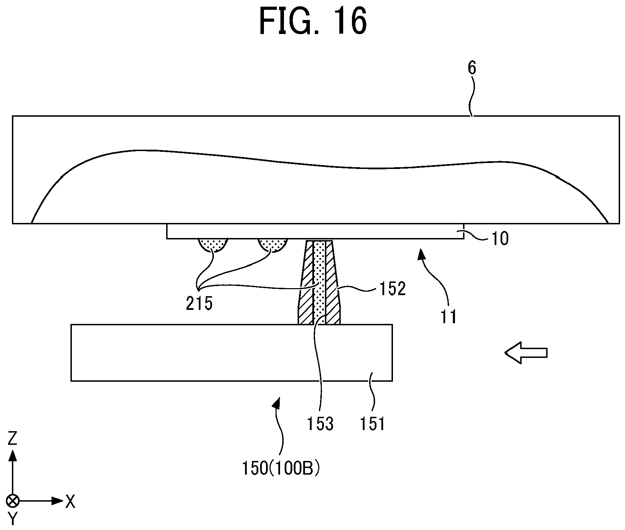

Next, a three-dimensional fabricating apparatus 100B according to a second embodiment will be described. FIGS. 15 and 16 are side views of a cleaner of the three-dimensional fabricating apparatus 100B according to the second embodiment, and are diagrams illustrating the non-contact cleaner that executes non-contact cleaning on the nozzle face of a discharge head. The three-dimensional fabricating apparatus 100B according to the second embodiment is different from the three-dimensional fabricating apparatus 100 in that a cleaner 150 is provided instead of the cleaner 50. In relation to the second embodiment, the same description as the first embodiment may be omitted.

FIG. 15 illustrates a state of the nozzle face 11 before cleaning. FIG. 16 illustrates a state of the nozzle face 11 during cleaning. FIGS. 15 and 16 illustrate a carriage 6, a discharge head 10, a nozzle face 11, a cleaner 150, a base 151, suction nozzles 152, a flow path 153, and adherence matter 215 of the three-dimensional fabricating apparatus 100B. The attached matter 215 is, for example, ink.

The three-dimensional fabricating apparatus 100B includes a cleaner 150. The cleaner 150 is an example of a non-contact cleaner. The cleaner 150 includes the base 151 and the suction nozzles 152. The base 151 supports the plurality of suction nozzles 152. The suction nozzles 152 suck adherence matter 215 adhering to the nozzle face 11 of the discharge head 10 in a non-contact manner. The suction nozzles 152 clean the discharge head 10 by sucking the adherence matter 215 which is liquid adhering to the nozzle face 11. The suction nozzles 152 can suck adherence matter remaining in the nozzles N.

The cleaner 150 includes a flow path 153 through which the sucked liquid flows and a negative pressure pump.

The flow path 153 is formed in the suction nozzles. The flow path 153 may also be formed inside and outside the base 151. The flow path 153 communicates with the suction pump. The controller 500 can remove the liquid adhering to the nozzle face 11 using the suction nozzles 152 by controlling the negative pressure pump of the cleaner 150. The cleaner 150 can perform suction using the suction nozzles 152 while moving relative to the nozzle face 11.

In addition to the cleaner 150, the three-dimensional fabricating apparatus 100B may include a cleaner 50 including a wiper 52 that comes into contact with the nozzle face 11. The three-dimensional fabricating apparatus 100B may execute the contact cleaning operation by the cleaner 50.

The three-dimensional fabricating apparatus 100B according to the second embodiment provides the same operations and advantageous effects as the three-dimensional fabricating apparatus 100 according to the first embodiment. The adherence matter 215 adhering to the nozzle face 11 can be removed by sucking the adherence matter 215 adhering to the nozzle face 11 by the suction nozzles 152.

In the three-dimensional fabricating apparatus 100B, after the suction by the suction nozzles 152, the adherence matter 215 adhering to the nozzle face 11 can be scraped off and removed by the wiper 52. The three-dimensional fabricating apparatus 100B can determine whether or not to execute the contact cleaning operation based on the state of the nozzle face 11 detected by a state detector 7. This decreases the frequency of the contact cleaning operation, and suppresses damage to the nozzle face 11. The three-dimensional fabricating apparatus 100B can perform highly reliable cleaning in a non-contact manner while suppressing damage to the discharge head 10. The operation of the three-dimensional fabricating apparatus 100B can be controlled according to the state of the discharge head 10.

The above-described embodiments are presented as examples and are not intended to limit the scope of the present disclosure. The above-described embodiments can be implemented in various other forms, and various omissions, substitutions, and changes can be made without departing from the gist of the present disclosure. In addition, the embodiments and modifications or variations thereof are included in the scope and the gist of the invention, and are included in the invention described in the claims and the equivalent scopes thereof.

In the three-dimensional fabricating apparatus 100 according to the first embodiment, the wipers 52 are driven to be in contact with the nozzle face 11 to execute the contact cleaning operation. Alternatively, the three-dimensional fabricating apparatus 100 may not execute the contact cleaning operation using the wipers 52. The three-dimensional fabricating apparatus 100 may include wipers functioning as contact wipers separately from the wipers 52 functioning as non-contact wipers.

The three-dimensional fabrication apparatus 100 according to the above-described embodiment is an example in which a three-dimensional fabrication apparatus includes the state detector 7 and the discharge detector 12 as the detector. In some embodiments, however, the three-dimensional fabrication apparatus 100 may include only the discharge detector 12 as the detector or include any other detector than the state detector 7 and the discharge detector 12 as the detector. The detector detects the state of the discharge heads 10. The detector may observe the nozzle face 11 of the discharge head 10 to detect the state of the discharge head 10. Alternatively, the detector may observe droplets discharged from the nozzles N of the discharge head 10 to detect the state of the discharge head 10. Further, the detector may observe droplets having been landed on a medium after discharged from the nozzles N of the discharge head 10, to detect the state of the discharge head 10. The controller 500 can control the operation of the three-dimensional fabricating apparatus according to the state of the discharge head 10 detected by the detector. The controller 500 can selectively execute a cleaning operation on the discharge head 10 according to the state of the discharge head 10.

Now, a description is given of some aspects of the present disclosure.

### Aspect 1

A three-dimensional fabricating apparatus includes a discharge head to discharge droplets and to fabricate a three-dimensional object, the apparatus comprising: a detector to detect a state of the discharge head; a non-contact cleaner (to clean the discharge head in a non-contact manner; and a controller to control operations of the three-dimensional fabricating apparatus according to the state of the discharge head detected by the detector after the non-contact cleaner cleans the discharge head.

### Aspect 2

The three-dimensional fabricating apparatus according to the above-described aspect 1 further includes a contact cleaner to contact the discharge head and clean the discharge head.The controller controls cleaning that is an operation of the three-dimensional fabricating apparatus so as to selectively execute cleaning by the non-contact cleaner and cleaning by the contact cleaner.

### Aspect 3

In the three-dimensional fabricating apparatus according to the above-described aspect 1 or 2, the non-contact cleaner includes a non-contact wiper to clean the discharge head in a non-contact manner, and the controller controls the cleaning so as to discharge droplets from a discharge nozzle of the discharge head to purge adherence matter in the discharge nozzle before performing the cleaning by the non-contact wiper.

### Aspect 4

The three-dimensional fabricating apparatus according to any one of the above-described aspects 1 to 3 further includes a nozzle cleaning mechanism to clean the discharge nozzle of the discharge head using a cleaning liquid. The controller controls the nozzle cleaning mechanism to execute the cleaning with the cleaning liquid before executing the cleaning by the non-contact cleaner.

### Aspect 5

The three-dimensional fabricating apparatus according to the above-described aspect 4 further includes an internal pressure controller to control an internal pressure of the discharge head. When the cleaning is performed by the nozzle cleaning mechanism, the internal pressure controller controls the internal pressure of the discharge head to a second pressure higher than a first pressure for normal droplet discharge.

### Aspect 6

In the three-dimensional fabricating apparatus according to any one of the above-described aspects 1 to 5, the detector is a state detector to detect the state of a nozzle face of the discharge head.

### Aspect 7

In the three-dimensional fabricating apparatus according to any one of the above-described aspects 1 to 5, the detector is a state detector to detect droplets discharged from nozzles of the discharge head.

### Aspect 8

In the three-dimensional fabricating apparatus according to any one of the above-described aspects 1 to 5, the detector includes a camera that captures an image of the discharge head, and the controller determines a discharge abnormality of the discharge head from the captured image of the discharge head.

### Aspect 9

In the three-dimensional fabricating apparatus according to the above-described aspect 8, the detector includes a first detector and a second detector, and the first detector includes the camera.

### Aspect 10

A three-dimensional fabricating method for fabricating a three-dimensional object includes: discharging droplets from a discharge head; cleaning the discharge head in a non-contact manner; detecting a state of the discharge head; and controlling an operation of a three-dimensional fabricating apparatus to fabricate the three-dimensional object, according to the state of the discharge head after cleaning the discharge head in a non-contact manner.

### Aspect 11

A three-dimensional fabricating system includes: the three-dimensional fabricating apparatus according to any one of the above-described aspects 1 to 9; and a fabrication-data generation apparatus to generate fabrication data of a three-dimensional object. The fabrication-data generation apparatus provides the fabrication data to the three-dimensional fabricating apparatus, and the three-dimensional fabricating apparatus fabricates the three-dimensional object according to the fabrication data.

## Claims

1. A three-dimensional fabricating apparatus (100), comprising:
a discharge head (10) configured to discharge droplets to fabricate a three-dimensional obj ect;
a detector (7, 12) configured to detect a state of the discharge head;
a non-contact cleaner (50) to clean the discharge head in a non-contact manner; and
a controller (500) configured to control an operation of the three-dimensional fabricating apparatus according to the state of the discharge head detected by the detector after the non-contact cleaner cleans the discharge head.

2. The three-dimensional fabricating apparatus according to claim 1, further comprising a contact cleaner (50) configured to contact the discharge head and clean the discharge head,
wherein the controller is configured to control a cleaning operation that is the operation of the three-dimensional fabricating apparatus, to selectively execute cleaning by the non-contact cleaner and cleaning by the contact cleaner.

3. The three-dimensional fabricating apparatus according to claim 1 or 2,
wherein the non-contact cleaner includes a non-contact wiper (52) configured to clean the discharge head in a non-contact manner, and
wherein the controller is configured to control a cleaning operation that is the operation of the three-dimensional fabricating apparatus, to discharge droplets from a discharge nozzle of the discharge head to purge adherence matter in the discharge nozzle before performing cleaning by the non-contact wiper.

4. The three-dimensional fabricating apparatus according to any one of claims 1 to 3, further comprising a nozzle cleaning mechanism (36) configured to clean a discharge nozzle of the discharge head using a cleaning liquid,
wherein the controller is configured to control the nozzle cleaning mechanism to execute cleaning on the discharge nozzle with the cleaning liquid before executing the cleaning by the non-contact cleaner.

5. The three-dimensional fabricating apparatus according to claim 4, further comprising an internal pressure controller (510) configured to control an internal pressure of the discharge head,
wherein when the nozzle cleaning mechanism executes the cleaning, the internal pressure controller is configured to control the internal pressure of the discharge head to a pressure higher than a pressure for normal droplet discharge.

6. The three-dimensional fabricating apparatus according to any one of claims 1 to 5,
wherein the detector is a state detector configured to detect a state of a nozzle face of the discharge head.

7. The three-dimensional fabricating apparatus according to any one of claims 1 to 5,
wherein the detector is a state detector configured to detect a droplet discharged from a discharge nozzle of the discharge head.

8. The three-dimensional fabricating apparatus according to any one of claims 1 to 5,
wherein the detector includes a camera to capture an image of the discharge head, and
wherein the controller is configured to determine a discharge abnormality of the discharge head from the image of the discharge head captured by the camera.

9. The three-dimensional fabricating apparatus according to claim 8,
wherein the detector includes a first detector and a second detector, the first detector including the camera.

10. A three-dimensional fabricating method for fabricating a three-dimensional object, the method comprising:
discharging droplets from a discharge head;
cleaning the discharge head in a non-contact manner;
detecting a state of the discharge head; and
controlling an operation of a three-dimensional fabricating apparatus configured to fabricate the three-dimensional object, according to the state of the discharge head after cleaning the discharge head in the non-contact manner.

11. A three-dimensional fabricating system comprising:
the three-dimensional fabricating apparatus according to any one of claims 1 to 9; and
a fabrication-data generation apparatus (600) configured to generate fabrication data of a three-dimensional object,
wherein the fabrication-data generation apparatus is configured to provide the fabrication data to the three-dimensional fabricating apparatus, and the three-dimensional fabricating apparatus is configured to fabricate the three-dimensional object according to the fabrication data.
